(19) Europäisches Patentamt
European Patent Office
Office européen des brevets

(11) Veröffentlichungsnummer: **0 207 245**
**A2**

(12) **EUROPÄISCHE PATENTANMELDUNG**

(21) Anmeldenummer: 86105573.9

(51) Int. Cl.⁴: **C01B 25/45**

(22) Anmeldetag: 22.04.86

(30) Priorität: 03.07.85 DE 3523686

(43) Veröffentlichungstag der Anmeldung:
07.01.87 Patentblatt 87/02

(84) Benannte Vertragsstaaten:
**BE DE FR GB**

(71) Anmelder: **Benckiser-Knapsack GmbH**
**Dr. Albert-Reimann-Strasse 2**
**D-6802 Ladenburg(DE)**

(72) Erfinder: **Auel, Theodor, Dr. Dipl.-Chem.**
**Winzerstrasse 3**
**D-6803 Edingen-Neckarhausen(DE)**
Erfinder: **Müller-Starke, Hans, Dr. Dipl.-Chem.**
**Quinckestrasse 36**
**D-6900 Heidelberg(DE)**
Erfinder: **Stoffel, Erwin**
**Heinestrasse 8**
**D-6947 Laudenbach(DE)**

(74) Vertreter: **Grussdorf, Jürgen, Dr. et al**
**Patentanwälte Zellentin & Partner**
**Rubensstrasse 30**
**D-6700 Ludwigshafen(DE)**

(54) **Verfahren zur Herstellung von kristallinem Alkalialuminiumphosphat.**

(57) Die Erfindung betrifft ein neues Verfahren zur Herstellung von kristallinem Alkalialuminiumphosphat der Formel

$$Na_aK_bH_cAl_d(PO_4)_e \cdot xH_2O$$

worin

a Werte von 0,5 bis 1,5, vorzugsweise 0,8 bis 1,1,

b Werte von 0 bis 0,5,

c Werte von 12 bis 16,

d Werte von 2,7 bis 3,3,

e Werte von 7 bis 9 und

x Werte von 3 bis 6 aufweisen und

$a + b + c + 3d = 3e$ ist

durch Vermischen von Phosphorsäure, Natriumhydroxid bzw. Natriumcarbonat, Kaliumhydroxid bzw. Kaliumcarbonat und Aluminiumhydroxid bzw. Aluminiumoxidhydrat in den durch die vorstehende Formel definierten Mengen in wäßriger Lösung mit einem Gehalt an freiem Wasser von 5-44 %, vorzugsweise 10-30 %, dadurch gekennzeichnet, daß man die Reaktionsmischung solange auf Temperaturen von 80-200°C, gegebenenfalls unter erhöhtem Druck, erhitzt, bis teilweise Kristallisation eintritt und danach das freie Wasser vollständig, gegebenenfalls unter reduziertem Druck bei 60-130°C entfernt und die Kristallisation vervollständigt.

Vorzugsweise hat das Produkt die Zusammensetzung $NaH_{14}Al_3(PO_4)_8 \cdot 4H_2O$. Zur Erzeugung von feinkristallinen Produkten wird vorzugsweise zunächst Phosphorsäure im Überschuß gegenüber Natrium und/oder Aluminium eingesetzt und der stoechiometrisch notwendige Rest erst nach Einsetzen der Kristallisation zugegeben.

## Verfahren zur Herstellung von kristallinem Alkalialuminiumphosphat

Die Erfindung betrifft ein verbessertes Verfahren zur Herstellung von kristallinen Alkalialuminiumphosphaten, im folgenden SALP genannt, der allgemeinen Formel

$$Na_aK_bH_cAl_d(PO_4)_e \bullet xH_2O,$$

worin

a Werte von 0,5 bis 1,5, vorzugsweise 0,8 bis 1,1,

b Werte von 0 bis 0,5,

c Werte von 12 bis 16,

d Werte von 2,7 bis 3,3,

e Werte von 7 bis 9 und

x Werte von 3 bis 6

aufweisen.

Die Werte für a, b, c, d und e werden so gewählt, daß die Relation $a + b + c + 3d = 3e$ stets gewährleistet ist. Besonders bevorzugt ist ein Alkalialuminiumphosphat der Formel $NaH_{14}Al_3(PO_4)_8 \bullet 4 H_2O$

SALP findet Verwendung als Backtriebsäure unter anderem in Fertigteigen, Tiefkühlteigen, Backmischungen und selbsttreibenden Mehlen.

Die Eigenschaften und die Verwendung von SALP sind in USP 2,550,491, USP 3,109,738, USP 3,501,314 sowie DE-A 27 30 226 und DE-A 27 49 581 ausführlich beschrieben.

SALP wird generell hergestellt aus $H_3PO_4$, NaOH bzw. $Na_2CO_3$ und $Al(OH)_3$. Man erhält je nach Wassergehalt der Reaktanden ein ca. 5-44 % freies Wasser enthaltendes Reaktionsgemisch als viskose übersättigte Lösung. Als freies Wasser wird im folgenden der Gesamtwassergehalt des Reaktionsgemisches, verringert um den Kristallwassergehalt des Produkts, bezeichnet.

Trockenes SALP wird aus dieser viskosen Lösung entweder gewonnen durch Ausfällen mit einem Methanol/Wasser-Gemisch (USP 2,550,490), durch Verdampfen des Wassers in diskontinuierlich (USP 2,957,750) oder kontinuierlich (DE-B 11 91 795, USP 3,311,448) arbeitenden Kneteranlagen, durch Sprühtrocknung (USP 2,995,421) oder durch Ausfällen mit verdünnter Phosphorsäure (EP-B 0 031 803).

Allen Fällprozessen (USP 2,550,490, EP-B 0 031 803) ist gemeinsam, daß die Ausbeuten unbefriedigend sind (ca. 60-70 %). Problematisch sind ebenfalls die dabei anfallenden Abwassermengen. Eine Fällung mit Methanol kommt außerdem wegen der dabei unvermeidlichen Kontamination des Produkts mit toxischem Methanol nicht in Betracht.

Sprühtrocknung (USP 2,995,421) liefert ein amorphes Produkt, das eine hohe Hygroskopizität aufweist. Für den Einsatz als Backtriebsäure muß SALP deutlich kristallin und wenig hygroskopisch sein.

In DE-B 11 91 795 bzw. der äquivalenten USP 3,311,448 wird ein Verfahren beschrieben, bei dem SALP in Form der viskosen übersättigten Lösung diskontinuierlich hergestellt und über einen Zwischenbehälter kontinuierlich zum Kristallisationsaggregat (Kneter) geführt wird. Dort wird die Reaktionslösung auf ein vorgelegtes Bett von SALP-Kristallen aufgebracht.

Bei diesem und den anderen vorstehend beschriebenen Trocknungsverfahren durchläuft das Reaktionsgemisch kurz vor der Kristallisation eine Phase extrem hoher Zähigkeit mit starker Beanspruchung der Verarbeitungsaggregate.

· Zur Verdeutlichung ein Zitat aus DE-B 11 91 795:

"Die bei der Herstellung von sauren Natrium-Aluminium-Phosphaten auftretenden Viskositäten lassen sich nur schwer quantitativ ausdrücken, da sie außerhalb des Bereichs von gewöhnlichen Viskosimetern liegen, vielleicht im Bereich von 100.000 bis 200.000 cP. Ungefähr entspricht die Viskosität der unmittelbar vor der Kristallisation anwesenden Phase etwa jener der Kunststoffasphalte oder der nicht-flüchtigen Erdölbestandteile".

Bei diesen Verfahren müssen deshalb starke Knetervorrichtungen eingesetzt werden, verbunden mit hohen Kosten und hohem Energieverbrauch.

Der Grund für die in der Patentliteratur beschriebene schlechte Verarbeitbarkeit der Reaktionsmischungen ist darin zu suchen, daß bei den Verfahren nach dem Stand der Technik aus den Reaktionsmischungen das freie Wasser schon entfernt wird, bevor die Kristallisation eingesetzt hat. Dies führt dazu, daß das Reaktionsgemisch zunächst als übersättigte viskose "Lösung" vorliegt. Kurz vor der vollständigen Entfernung des freien Wassers tritt spontan Kristallisation ein. Zu diesem Zeitpunkt ist auch der extreme Anstieg in der Viskosität zu beobachten. Das Produkt kann zu diesem Zeitpunkt nur mit überdimensionierten Antriebsaggregaten in Bewegung gehalten werden. Diese extreme Belastung führt naturgemäß auch zu einem erhöhten Verschleiß.

Es war daher die Aufgabe, ein Verfahren zu entwickeln, das die Produktion von kristallinem SALP unter Vermeidung der extremen mechanischen Belastung der Verarbeitungsaggregate erlaubt.

Diese Aufgabe wird erfindungsgemäß dadurch gelöst, daß die klare, niedrigviskose Reaktionsmischung aus Phosphorsäure, Natronlauge und Aluminiumhydroxid zunächst durch längeres Erhitzen auf Temperaturen zwischen 80°C und 200°C teilweise zur Kristallisation gebracht und erst dann das freie Wasser vollständig entfernt und die Kristallisation vervollständigt wird.

Die Erfindung ist durch die Ansprüche näher gekennzeichnet.

Kristallisation des SALP wird erfindungsgemäß beispielsweise erreicht durch langsames Abdestillieren des freien Wassers unter Normaldruck. Üblicherweise betragen die Trocknungszeiten für SALP-Ansätze nach dem Stand der Technik etwa 40 Minuten (DE-B 11 91 795). Verlängert man die Zeit bis zur vollständigen Entfernung des freien Wassers auf 2-10 Stunden, vorzugsweise 4 Stunden und hält die Reaktionsmischung während dieser Zeit auf Siedetemperatur, so erhält man ohne die zuvor beschriebenen extremen Anstiege in der Viskosität ein kristallines Produkt. Auch Erhitzen des Reaktionsgemisches unter Rückfluß ohne Abdestillieren von Wasser führt erfindungsgemäß zur Kristallisation des SALP. Danach kann das freie Wasser rasch unter Normaldruck oder vermindertem Druck entfernt werden. Bei dieser Verfahrensweise werden ebenfalls ohne besondere mechanische Belastungen der Antriebsaggregate kristalline Produkte erhalten.

Eine weitere erfindungsgemäße Verfahrensweise zur Kristallisation des SALP ist das Erhitzen im geschlossenen Gefäß auf Temperaturen zwischen 110°C und 200°C. Dabei baut sich im Reaktionsgefäß ein Druck zwischen 1,1 und 12 bar auf. Diese Verfahrensweise bietet den Vorteil, daß die Kristallisationsgeschwindigkeit gegenüber der Verfahrensweise bei Normaldruck und geringeren Temperaturen enorm verkürzt wird. Die Kristallisation ist bei dieser Verfahrensweise je nach angewandter Temperatur nach 10 bis 60 Minuten weitgehend fortgeschritten. Danach wird entspannt und das freie Wasser rasch abdestilliert.

Wichtig für das Einsetzen der Kristallisation ist ein ausreichender Gehalt an freiem Wasser in der Reaktionsmischung. Der Gehalt an freiem Wasser sollte mindestens 5 %, vorzugsweise 10-30 % betragen. Nach unten ist der Gehalt an freiem Wasser begrenzt durch die mit abnehmendem Wassergehalt zunehmende Viskosität des Reaktionsgemisches. Nach oben ist der Gehalt an freiem Wasser durch die Löslichkeit des Aluminiumphosphats begrenzt;er ergibt sich in der Regel aus dem Wassergehalt der Reaktanden.

Das Einsetzen der Kristallisation kann sehr gut anhand der zunehmenden Trübung des Reaktionsgemisches verfolgt werden.

Die Viskosität des Reaktionsgemisches ist zu diesem Zeitpunkt noch gering. Erst gegen Ende der Wasserverdampfung ist ein geringer Anstieg der Viskosität zu beobachten. Dieser Anstieg ist jedoch bei Weitem nicht so deutlich ausgeprägt wie bei den bekannten Verfahren.

Es ist wichtig, die Temperatur des Reaktionsgemisches während der Kristallisation möglichst hoch zu halten, um eine ausreichende Kristallisationsgeschwindigkeit zu gewährleisten. Bei Raumtemperatur ist die Kristallisationsgeschwindigkeit des SALP so gering, daß mit SALP-Kristallen geimpfte Reaktionsgemische selbst nach drei Monaten keine Tendenz zur Kristallisation zeigen.

Das erfindungsgemäße Verfahren ist anwendbar auf die Herstellung von SALP der Formel $NaH_{14}Al_3(PO_4)_8 \bullet 4H_2O$, aber auch auf Verbindungen der allgemeinen Formel $Na_aK_bH_cAl_d(PO_4)_e \bullet xH_2O$, worin a Werte von 0,5 bis 1,5, vorzugsweise 0,8 bis 1,1, b Werte von 0 bis 0,5, c Werte von 12 bis 16, d Werte von 2,7 bis 3,3, e Werte von 7 bis 9 und x Werte von 3 bis 6 aufweisen. Die Werte für a, b, c, d und e werden so gewählt, daß die Relation $a + b + c + 3d = 3e$ gewährleistet ist.

Setzt man bei der Herstellung von SALP der Formel $NaH_{14}Al_3(PO_4)_8 \bullet 4H_2O$, beispielsweise aus Phosphorsäure, Natronlauge und Aluminiumhydroxid, die Komponenten im Verhältnis 8:1:3 ein und bringt das Reaktionsgemisch nach dem erfindungsgemäßen Verfahren zur Kristallisation, so erhält man ein grobkristallines SALP, das für die meisten Anwendungszwecke noch gemahlen werden muß. Eine Verfahrensweise, bei der auf die nachträgliche Mahlung verzichtet werden kann, bedeutet eine deutliche Verbesserung des Herstellverfahrens.

Überraschenderweise wurde nun gefunden, daß man direkt ein feinkristallines SALP erhält, wenn man Phosphorsäure im Überschuß gegenüber Aluminium oder gegenüber Aluminium und Natrium einsetzt und dieses Reaktionsgemisch in der erfindungsgemäßen Weise kristallisiert.

Der Überschuß an Phosphorsäure kann durch spätere Zugabe von Aluminiumhydroxid zum Teil oder vollständig ausgeglichen werden. Vollständiger Ausgleich bedeutet, daß das Verhältnis P:Al im Produkt wieder 8:3 beträgt. Dieser Ausgleich wird zweckmäßigerweise vorgenommen, wenn die Kristallisation schon weitgehend vorangeschritten ist, das Reaktionsgemisch aber noch ausreichend freies Wasser enthält, um vollständig mit dem zugesetzten Aluminiumhydroxid zu reagieren.

Der Überschuß an Phosphorsäure, der notwendig und ausreichend ist, um ein feinkörniges SALP zu erzielen, beträgt 3 % bis 30%. Bevorzugt ist ein Überschuß von 5 % bis 15 %.

Man erhält auf diese Weise ein SALP, das direkt und ohne zusätzliche Mahlung als Backtriebsäure eingesetzt werden kann.

Typischerweise liegen bei der erfindungsgemäßen Verfahrensweise 90-98 % des Produkts in einer Korngröße unter 90$\mu$m vor.

SALP weist bekanntlich eine hohe Hygroskopizität auf. Für die Anwendung als Backtriebsäure, insbesondere in Fertigmehlen oder Backmischungen, ist diese hohe Hygroskopizität von Nachteil. Lagerung dieser Mischungen bei hohen Temperaturen und hoher Luftfeuchtigkeit führt zu Verbackungen.

Die Hygroskopizität des erfindungsgemäß hergestellten SALP kann nach bekannten Verfahren verringert werden. Dies kann zum einen geschehen durch teilweisen Ersatz des Natriums und/oder Wasserstoffs durch Kalium. Das Kalium kann dabei vor der Kristallisation in Form von Kaliumhydroxid, Kaliumoxid oder Kaliumcarbonat bzw. nach der Kristallisation in Form von Kaliumchlorid, Kaliumsulfat oder Kaliumphosphat eingebracht werden (USP 3,205,073, USP 3,411,872, DE-A 27 30 226, DE-A 27 07 271).

Zum anderen kann die Hygroskopizität herabgesetzt werden durch Umhüllung der SALP-Kristalle mit Calciumphosphaten. Diese Umhüllung wird erreicht durch Mischen der SALP-Kristalle mit Calciumphosphaten, Calciumhydroxid oder Calciumcarbonat (DE-A 27 30 226).

Die folgenden Beispiele dienen zur näheren Erläuterung der Erfindung.

Für die folgenden Beispiele wurde, falls nicht anders angegeben, die Kristallisation des SALP in einer beheizbaren Kneterapparatur mit einem Fassungsvermögen von 1,5 kg Produkt und einer maximalen Leistung von 1,1 kW vorgenommen.

Vergleichsbeispiel nach dem Stand der Technik

In einem mit Rührer und Rückflußkühler versehenen Reaktionsgefäß werden 1424 g 82,6 %ige Phosphorsäure vorgelegt und unter Rühren 120 g 50 %ige Natronlauge zugegeben. Nach beendeter Zugabe wird die Mischung auf 90°C erwärmt und portionsweise 351 g Aluminiumhydroxid zugegeben. Dabei erwärmt sich die Reaktionsmischung auf Siedetemperatur. Die so erhaltene klare viskose Lösung wird in die beheizte Kneterapparatur überführt und das freie Wasser in 40 Minuten unter Normaldruck verdampft.

Mit zunehmenden Wasserverlust steigt die Viskosität des Gemisches an, erkennbar an der zunehmenden Leistungsaufnahme des Kneters. Kurz vor der vollständigen Entfernung des freien Wassers ist das Leistungsmaximum erreicht und der Kneter blockiert. Es wird eine glasartige hochzähe amorphe Masse erhalten, durchsetzt mit einigen SALP-Kristallen.

Beispiel 1

Zu 1424 g einer 82,6 %igen Phosphorsäure werden unter Rühren rasch 120 g einer 50 %igen Natronlauge gegeben, die Mischung auf 90°C erwärmt und portionsweise während 20 Minuten 351 g Aluminiumhydroxid zugegeben. Dabei erhitzt sich die Mischung zum Sieden.

Die zunächst klare viskose Mischung wird unter Rühren refluxiert. Dabei trübt sich das Gemisch infolge Kristallabscheidung immer mehr. Die Viskosität bleibt dabei etwa gleich. Nach 4 Stunden wird der Kristallbrei in die beheizte Kneterapparatur überführt und während einer Stunde das freie Wasser entfernt. Man erhält ohne nennenswerten Anstieg der Leistungsaufnahme 1400 g eines grobkristallinen Pulvers, das mit Hilfe der Röntgendiffraktometrie als $NaH_{14}Al_3(PO_4)_8 \bullet 4H_2O$ identifiziert wird.

Beispiel 2

In einem heizbaren Druckreaktor mit Mischer werden 95 kg einer 82,6 %igen Phosphorsäure vorgelegt, rasch 8 kg einer 50 %igen Natronlauge zugegeben und das Gemisch auf 90°C erwärmt. 23,4 kg Aluminiumhydroxid werden portionsweise innerhalb 15 Minuten zugegeben. Dabei erhitzt sich das Reaktionsgemisch zum Sieden.

Die zunächst klare Lösung wird auf Siedetemperatur gehalten und während 4 Stunden unter Normaldruck das freie Wasser abdestilliert.

Man erhält ohne nennenswerten Anstieg der Leistungsaufnahme des Mischers 95 kg eines grobkristallinen SALP.

Beispiel 3

Analog zu Beispiel 2 werden 95 kg 82,6 %ige Phosphorsäure, 8 kg 50 %ige Natronlauge und 23,4 kg Aluminiumhydroxid zur Reaktion gebracht und im geschlossenen Druckreaktor auf 150°C erhitzt. Die fortschreitende Kristallisation ist gut an der zunehmenden Trübung des Reaktionsgemisches zu verfolgen.

Nach 30 Minuten wird langsam entspannt und dabei das freie Wasser abdestilliert.

Man erhält ohne nennenswerten Anstieg der Leistungsaufnahme des Mischers 94 kg grobkristallines SALP.

Beispiel 4

Analog zu Beispiel 1 werden 1566 g einer 82,6 %igen Phosphorsäure, 120 g einer 50 %igen Natronlauge und 351 g Aluminiumhydroxid zur Reaktion gebracht und die Reaktionsmischung 4 Stunden refluxiert. Der resultierende Kristallbrei wird in die beheizte Kneterapparatur überführt und unter Vakuum das freie Wasser abdestilliert. Nach 20 Minuten werden 35 g Aluminiumhydroxid zugegeben. Nach weiteren 10 Minuten Vakuumtrocknung erhält man 1480 g eines feinkristallinen SALP mit einem Anteil von 90 % unter 90 $\mu$m Kristallgröße.

Beispiel 5

Analog zu Beispiel 2 werden 1566 g einer 82,6 %igen Phosphorsäure, 132 g einer 50 %igen Natronlauge und 351 g Aluminiumhydroxid zur Reaktion gebracht und aus der anfangs klaren Mischung langsam unter Normaldruck Wasser abdestilliert. Nach drei Stunden werden zu dem noch feuchten Kristallbrei 18 g Aluminiumhydroxid zugegeben und noch eine weitere Stunde Wasser abdestilliert. Man erhält 1470 g eines feinkristallinen SALP mit einem Anteil von 95 % unter 90 $\mu$m Kristallgröße.

Beispiel 6

Analog zu Beispiel 2 werden 98 kg einer 82,6 %igen Phosphorsäure, 8 kg einer 50 %igen Natronlauge und 23,4 kg Aluminiumhydroxid zur Reaktion gebracht und im geschlossenen Druckreaktor auf 170°C erhitzt. Nach 30 Minuten wird entspannt und dabei der größte Teil des freien Wassers entfernt. Nach Zugabe von 1,2 kg Aluminiumhydroxid wird das restliche Wasser unter Normaldruck abdestilliert. Man erhält 97 kg eines feinkristallinen SALP mit einem Gehalt von 97 % unter 90 $\mu$m Kristallgröße.

**Ansprüche**

1. Verfahren zur Herstellung von kristallinem Alkalialuminiumphosphat der Formel

$$Na_aK_bH_cAl_d(PO_4)_e \bullet xH_2O$$

worin

a Werte von 0,5 bis 1,5, vorzugsweise 0,8 bis 1,1,

b Werte von 0 bis 0,5,

c Werte von 12 bis 16,

d Werte von 2,7 bis 3,3,

e Werte von 7 bis 9 und

x Werte von 3 bis 6 aufweisen und

$$a + b + c + 3d = 3e \text{ ist}$$

durch Vermischen von Phosphorsäure, Natriumhydroxid bzw. Natriumcarbonat, Kaliumhydroxid bzw. Kaliumcarbonat und Aluminiumhydroxid bzw. Aluminiumoxidhydrat in den durch die vorstehende Formel definierten Mengen in wäßriger Lösung mit einem Gehalt an freiem Wasser von 5 bis 44 %, vorzugsweise 10 bis 30 %, dadurch gekennzeichnet, daß man die Reaktionsmischung solange auf Temperaturen zwischen dem Siedepunkt und 200°C, gegebenenfalls unter erhöhtem Druck, erhitzt, bis teilweise Kristallisation eintritt und danach das freie Wasser vollständig, gegebenenfalls unter reduziertem Druck bei 60 bis 130°C entfernt und die Kristallisation vervollständigt.

2. Verfahren gemäß Anspruch 1, dadurch gekennzeichnet, daß das Produkt SALP der Formel $NaH_{14}Al_3(PO_4)_8 \bullet 4H_2O$ ist.

3. Verfahren gemäß Anspruch 1 oder 2, dadurch gekennzeichnet, daß die Reaktionsmischung 1 bis 10, vorzugsweise 2 bis 4 Stunden auf Siedetemperatur erhitzt wird, wobei gegebenenfalls ein Überschuß von Wasser abdestilliert wird.

4. Verfahren gemäß Ansprüchen 1-3, dadurch gekennzeichnet, daß man die Reaktionsmischung in einem Druckgefäß bei bis zu 12 bar Druck auf Temperaturen von 110 bis 200°C, vorzugsweise 130 bis 160°C für 10 bis 60 Minuten erhitzt.

5. Verfahren gemäß Ansprüchen 2-4, dadurch gekennzeichnet, daß die Reaktion in zwei Stufen durchgeführt wird, wobei zunächst Phosphorsäure im Überschuß gegenüber Natrium und Aluminium oder Aluminium eingesetzt wird und der stoechiometrische Rest von Natrium und Aluminium oder Aluminium erst nach Einsetzen der Kristallisation zugegeben wird.